Europäisches Patentamt

European Patent Office

Office européen des brevets

(11) Veröffentlichungsnummer: **0 152 575**
**A1**

# (12) EUROPÄISCHE PATENTANMELDUNG

(21) Anmeldenummer: 84114992.5

(22) Anmeldetag: 08.12.84

(51) Int. Cl.⁴: **C 09 D 3/68, C 09 D 7/00**

(30) Priorität: **29.12.83 DE 3347374**

(43) Veröffentlichungstag der Anmeldung: **28.08.85**
**Patentblatt 85/35**

(84) Benannte Vertragsstaaten: **AT BE CH DE FR GB IT LI NL SE**

(71) Anmelder: **Herberts Gesellschaft mit beschränkter Haftung, Christbusch 25, D-5600 Wuppertal 2 (DE)**

(72) Erfinder: **Bretsch, Friedrich, Hauffstrasse 3, D-7012 Fellbach (DE)**
Erfinder: **Gottschalk, Ingrid, Immanuel-Kant-Strasse 18, D-7251 Hemmingen (DE)**

(74) Vertreter: **Türk, Dietmar, Dr. rer. nat. et al, Redies, Redies, Türk & Gille Patentanwälte Brucknerstrasse 20, D-4000 Düsseldorf 13 (DE)**

(54) Mattierungsmittel enthaltender Polyesterlack.

(57) Mattierungsmittel enthaltender Polyesterlack auf Basis ungesättigter Polyesterharze als Bindemittel enthaltend hochdisperse Harnstoff-Formaldehydkondensate als Mattierungsmittel. Die Erfindung betrifft auch die Verwendung dieses Polyesterlacks zur Herstellung transparenter Lackfilme in Schichtstärken von 25 bis 500 µm.

EP 0 152 575 A1

ACTORUM AG

Anmelder: HERBERTS Gesellschaft mit beschränkter Haftung, Christbusch 25, D-5600 WUPPERTAL 2

Mattierungsmittel enthaltender Polyesterlack

Gegenstand der Erfindung ist ein Mattierungsmittel enthaltender Polyesterlack auf Basis ungesättigter Polyesterharze als Bindemittel. Mit diesem Lack können gemäß der Erfindung in überraschender Weise sehr transparente und dennoch matte Lacküberzüge erzeugt werden.

Ungesättigte Polyesterharze werden seit Jahrzehnten in großem Umfang auf vielen Gebieten der Beschichtung von Substraten eingesetzt. Die ungesättigten Polyesterharze sind Lösungen von ungesättigten Polyestern in anpolymerisierbaren Verbindungen, z.B. Styrol, Acrylmonomere und dergleichen, vergleiche
1)"Lackkunstharz", Wagner/Sarx,(1971) C. Hanser Verlag, München, Seiten 129 bis 142;

2)Lehrbuch der Lacke und Beschichtungen, H.Kittel, Verlag W.A. Colomb, (1973) Band I, Teil 2, Kapitel 3.1.4.4., Seiten 778 bis 793 und Band 4, Kapitel 4.2.2.7.2.;

3)Firmenschrift "Bayer-Produkte für die Lackindustrie" Band I, Kapitel: Roskydal.

Ein spezielles Gebiet der ungesättigten Polyesterlacke ist das solcher Lacke, die als "Polyesterfertigeffekt" bezeichnet werden. Hierunter versteht man solche ungesättigte Polyesterlacke, die nach dem Auftragen auf ein Möbelteil und nach der Aushärtung keine Nachbehandlung z.B. durch Schleifen und Polieren oder Schleifen und Bohnen oder Schleifen und Abgießen mit z.N. Nitrocellulose-Mattlacken benötigen.

-2-

Mit anderen Worten: Es wird der nach der Lackaushärtung erhaltene Oberflächeneffekt hinsichtlich seines Glanzgrades belassen. Diese bekannten Lacke und Verfahren befriedigen nicht alle heute bestehenden Wünsche hinsichtlich der Eigenschaften dieser Lackoberflächen. Das gilt für die mechanischen, chemischen und/oder ästhetischen Eigenschaften. Die Lackfilme sollen eine hohe Widerstandsfestigkeit gegen mechanische Einwirkungen wie Kratzen und Aufpolieren (Glänzendwerden durch häufiges Anfassen) und gute Beständigkeit gegen im Haushalt verwendete chemische Mittel, z.B. Reinigungsmittel und alkoholhaltige Flüssigkeiten, aufweisen. Besonders hohe Anforderungen werden an den optischen Eindruck gestellt. Die Oberflächen sollen ebenmäßig glatt sein, müssen einen gleichmäßigen, reproduzierbaren Glanzgrad aufweisen und müssen weiterhin, insbesondere auf dunklen Untergründen wie dunkel gebeizten Furnieren, eine hohe Transparenz aufweisen. Es ist besonders schwierig und mit den auf dem Markt befindlichen Lacken nur in unzureichender Weise möglich, eine derartige hohe Transparenz bei gleichzeitig geringem Glanzgrad zu erhalten, d.h. matte Lackoberflächen von hoher Transparenz herzustellen. Dieses Problem ist naturgemäß besonders groß, wenn große Schichtstärken des Lackfilms gewünscht sind.

Die bekannten Polyesterfertigeffektlacke enthalten zur Erzielung eines matten Lacküberzuges bestimmte Mittel, wie Paraffine, Wachse oder bevorzugt fein verteiltes Siliciumdioxid als Mattierungsmittel. Besonders die fein verteilten Siliciumdioxide führen dazu, daß die Polyesterlacke ihre Transparenz je nach Art und Menge mit zunehmender Schichtstärke der Lacküberzüge einbüßen. Dies wird besonders auf dunklen Untergründen, z.B. einem dunkel gebeizten Mahagonifurnier, sichtbar. Dem Betrachter erscheinen solche Lackfilme mehr oder weniger schleirig, milchig bzw. trüb.

Ein weiterer wesentlicher Nachteil der fein verteiltes Siliciumdioxid enthaltenden Polyesterlacke ist die schlechte Reinigungsfähigkeit der mit den Lacken bei der Verarbeitung in Berührung kommenden Anlagen. Beim Säubern von derartigen Auftragsgeräten mit Lösemitteln (Verdünnungen) kommt es zu unerwünschten Ausfällungen des Siliciumdioxids, das sich in den Anlagen wie Gießmaschinen oder besonders störend in Rohrleitungen ablagert. Dies führt zu einem ganz außerordentlich erhöhten Reinigungsaufwand.

Der Zusatz von Paraffinen zu Polyesterfertigeffektlacken führt ebenfalls zu trüben Lackfilmen, weil das Paraffin an die Lackoberfläche ausschwimmt und insbesondere bei relativ hochschmelzenden Paraffinen mit einem Schmelzbereich von etwa 60 bis 62°C eine unerwünschte Lichtbrechung hervorruft. Auch sind diese Oberflächen nicht ausreichend kratzfest. Bei Einsatz von Paraffinen mit einem niedrigen Schmelzbereich von etwa 52 bis 54°C sind die Lackfilme zwar transparenter, bilden jedoch keine gleichmäßigen Effekte aus und sind ebenfalls nicht ausreichend kratzfest. Niedere Glanzgrade können nicht erhalten werden.

Zudem haben die mit Paraffinen mattierten Polyesterlacke den Nachteil, daß sie keine reproduzierbaren Effekte ermöglichen, weil das Paraffin je nach Lack- und Umgebungstemperatur als auch je nach der Temperatur des Substrats unterschiedlich stark an die Oberfläche ausschwimmt.

4

Der Erfindung liegt die Aufgabenstellung zugrunde, einen Mattierungsmittel enthaltenden Polyesterlack auf Basis ungesättigter Polyesterharze als Bindemittel zu finden, der die oben beschriebenen Nachteile nicht oder in erheblich geringerem Umfang aufweist. Insbesondere liegt der Erfindung die Aufgabenstellung zugrunde, einen Lack zu finden, der auch bei hohen Schichtstärken eine ausgezeichnete Transparenz hat und dennoch Lackfilme mit niedrigem Glanzgrad, d.h. Mattlackfilme ergibt. Außerdem sollen die erhaltenen Lackfilme gegen mechanische Einwirkungen wie Kratzen unempfindlich sein. Der Lack soll auch bei unterschiedlichen Temperaturen unter Erzielung von Lackfilmen mit reproduzierbaren Eigenschaften verarbeitbar sein.

Es wurde nun gefunden, daß diese Aufgabenstellung in überraschend einfacher Weise dadurch gelöst werden kann, daß die eingangs erwähnten Polyesterlacke als Mattierungsmittel hochdisperse Harnstoff-Formaldehydkondensate enthalten.

Der Polyesterlack gemäß der Erfindung enthält als Bindemittel die eingangs erwähnten ungesättigten Polyesterharze, wie sie auch nach dem Stand der Technik zur Herstellung von Polyesterlacken eingesetzt werden. Diese Polyesterfertigeffektlacke werden nach dem Stand der Technik zum Lackieren von insbesondere Möbeloberflächen eingesetzt und sind im Handel erhältlich. Es wird dazu verwiesen auf die Merkblättersammlung der Firma Bayer, Uerdingen, Bundesrepublik Deutschland:"Roskydal-Glanzpolyester", KL-A-L, August 1977, Richtrezepturen RR 607/5 und RR 608/2, um nur einige Beispiele zu nennen. Allgemein können gemäß der Erfindung sogenannte Glanztyp-Polyesterharze eingesetzt werden, wie sie in den oben zitierten Literaturstellen im einzelnen beschrieben sind.

Die Aushärtung der ungesättigten Polyesterharze erfolgt in an sich bekannter Weise. Die folgenden Härtungsmechanismen sind allgemein üblich:

a) peroxidische Härtung bei Raumtemperatur oder bei erhöhter Temperatur, die mittels Umluft-Trockner oder durch Wärmestrahlung erzielt wird.

b) Härtung durch UV-Strahlen, wobei die Polyesterlacke UV-Sensibilisatoren enthalten können.

c) Härtung mittels energiereicher Strahlung, insbesondere mittels Elektronenstrahlen.

Die ungesättigten Polyesterharze des Stands der Technik sind durch bekannte Zusätze oder sonstige Formulierungen auf das gewünschte Härtungsverfahren eingestellt.

Die gemäß der Erfindung als Mattierungsmittel verwendeten hochdispersen Harnstoff-Formaldehydkondensate haben zweckmäßig eine Teilchengröße von 0.05 bis 1 µm als Primär- korn. Es ist weiterhin zweckmäßig, daß diese Partikel in Form von Agglomeraten vorliegen, die einen Durchmesser im Bereich von etwa 1 bis 10 µm haben. Die spezifische Oberfläche solcher Produkte liegt im Bereich von etwa 4 bis 70 $m^2$/g, vorzugsweise 20 bis 30 $m^2$/g. Derartige hochdisperse Harnstoff-Formaldehydkondensate sind im Handel erhältlich, z.B. unter den eingetragenen Warenzeichen Pergopak M und Unisil-Weiß MG 2505. Für derartige Produkte wird in "Die Makomolekulare Chemie" 149 (1971) Seite 25, Absatz 9.2. folgendes Herstellungsverfahren angegeben:
315 ml deionisiertes Wasser, 180 g Harnstoff und 450 g wäßrige Formaldehydlösung (30 Gew.-%) werden während 2 Stunden, bei pH = 7 und 70°C unter Rühren kondensiert. Danach beträgt der Formaldehydumsatz 91 %. Man kühlt das Vorkondensat auf 50°C und verrührt es rasch mit einer Lösung von 9.7 g Sulfaminsäure in 315 ml Wasser von 50°C. Nach etwa 5 Sek. tritt eine Opaleszenz auf, die sich rasch zu einer Trübung verdichtet. Nach etwa 12 Sek. ist das Reaktionsgemisch zu einem Gel erstarrt, das sich rasch verfestigt. Die Reaktionswärme verursacht einen Temperaturanstieg auf 65°C. Bei dieser Temperatur beläßt man das Gel während 2 Stunden.

Danach zerkleinert man das Gel mittels eines Schneidegranulators auf eine Korngröße von 1 bis 2 mm, versetzt es mit der gleichen Menge Wasser und neutralisiert mit 10%iger Sodalösung auf pH = 7.5. Man zentrifugiert das Polymere ab, wäscht nach und trocknet bei 110°C im Luftstrom. Nach Erkalten desagglomeriert man in 2 Passagen durch eine hochtourige Stiftmühle. Man erhält 227 g Polymeres als leicht fließendes, weißes Pulver mit einer spezifischen Oberfläche von 28.7 m$^2$/g und einer scheinbaren Dichte von 57 g/l.

Für das Produkt Pergopak M wird vom Hersteller folgende Spezifikation angegeben:

Aussehen: Feines, voluminöses, weißes Pulver. Chemische Konstitution: Harnstoff-Formaldehyd-Harz. Das Molekül besitzt im Durchschnitt noch etwa 1.5% freie Methylol-Gruppen. Der Stickstoffgehalt des lufttrockenen Produkts liegt bei 30 ± 0.5%. Spezifisches Gewicht: 1.45 g/cm$^3$. Schüttgewicht: 50 bis 90 g/l. Spezifisches Verpackungsgewicht: 150 bis 200 g/l, komprimiert. Teilchenform und Größe: Primärteilchen von 0.1 bis 0.15 μm bilden Agglomerate mit 4 bis 8 μm Durchmesser. Die Agglomerate sind offenporig und besitzen ein produktspezifisches Porenvolumen sowie eine konstante spezifische Oberfläche. Spezifische Oberfläche: 22 m$^2$/g. Porenvolumen: Ca. 2.7 cm$^3$/g inneres Porenvolumen bei einem durchschnittlichen Durchmesser (als angenommene zylindrische Kapillare) von 0.3 bis 0.4 μm .; Ölabsorption (DBP) = 290 bis 300%. Brechungsindex: 1.58. Spezifischer Streuungskoeffizent: 4900 bis 5000 cm$^2$/g, bestimmt am Pigment (Kubelka und Munk). Weißgrad Tappi: 97 bis 98%. pH-Wert: 7 $\pm$ 1 einer 3%igen Dispersion in destilliertem Wasser. Zetapotential: Im Bereich der Papierherstellung (pH 4.5 bis 8) hat Pergopak M ein positives Zetapotential. Flüchtige Anteile: Pergopak M ist hydrophil und weist je nach Luftfeuchtigkeit folgende Werte auf: 40% rel.Feuchtigkeit 192 Std. 14.7% (Normalwert); 52% rel.Feuchtigkeit 192 Std. 18.3%; 79% rel. Feuchtigkeit 192 Std. 20.8%. Glührückstand: Ca. 2% ; im Papier liegt Pergopak M praktisch aschefrei vor. Abrasivität Valley, 3000 Bewegungen: 1 bis 3 mg.

Die Menge an Harnstoff-Formaldehydkondensaten, die im Polyesterlack gemäß der Erfindung enthalten ist, richtet sich nach dem gewünschten Mattierungsgrad. Sie beträgt in der Regel etwa 1 bis 15Gew.%, vorzugsweise mindestens 3 Gew.% und höchstens 11 Gew.%, bezogen auf den gebrauchsfertigen Lack.

Ein besonderer Vorteil des Polyesterlacks gemäß der Erfindung liegt darin, daß er zur Erzeugung von Lackfilmen mit hohen Schichtstärken eingesetzt werden kann, die dennoch eine sehr hohe Transparenz und eine ruhige, matte Oberfläche ergeben.Derartige Schichtstärken können im Bereich von 25 bis 500 μm liegen. Die Schichtstärken können über 150 μm und sogar über 300 μm betragen. Die obere Grenze liegt bevorzugt bei etwa 400 μm, besonders bevorzugt bei 350 μm.

Das Auftragen des Polyesterlacks gemäß der Erfindung erfolgt nach den üblichen Verfahren für ungesättigte Polyesterlacke, z.B. durch Spritzen, Gießen, Walzen oder Rakeln. Es können die Substrate beschichtet werden, die auch mit den bekannten ungesättigten Polyesterlacken bevorzugt beschichtet werden, wie Möbel, Tonmöbel, Paneele, Parketts, oder Teile davon. Beispiele für Substrate sind ungebeizte und gebeizte, furnierte Spanplatten, ungebeizte und gebeizte Massivhölzer, rohe oder vorgrundierte Hartfaserplatten, mit Dekorfolien versehene Spanplatten, mit Grundierfolien versehene Spanplatten, furnierte oder Massivpaneele, mit einem Spachtel versehene und bedruckte Span- oder Hartfaserplatten, Parkettplatten.

Die Polyesterlacke gemäß der Erfindung können übliche Additive enthalten, wie sie für die bekannten Polyesterharze üblich sind. Es können ebenfalls Lösungsmittel zugesetzt werden, um die Viskosität oder den Festkörpergehalt zu regulieren. Weiterhin können Lösemittel zugesetzt werden, um in bekannter Weise zu Fertigeffekten besonderer Art zu gelangen, z.B. den sogenannten offenporigen Lackierungen. Diese finden besonders dann Anwendung, wenn bei der Lackierung von Furnieren die Holzporen sichtbar erhalten bleiben sollen. Bei einem Polyesterlack, der nur aus ungesättigtem Polyester, daran anpolymerisierbarer Verbindung wie Styrol und Mattierungsmittel besteht, liegt vor und nach dem Aushärten (der Polymerisation) ein Festkörpergehalt von 100 % vor. Dies führt dazu, daß je nach Auftragsmenge besonders die feinen Holzporen zugegossen sind. Wenn dies nicht erwünscht ist, müssen, wie erwähnt, Lösemittel zugesetzt werden.

Ebenfalls in an sich bekannter Weise können die Polyesterlacke zur besseren Benetzung gewisser Substrate z.B. Cellulosenitrat oder Celluloseacetobutyrat enthalten. Es ist auch möglich, durch Pigmentierung farbige Lacke herzustellen.

Die gemäß der Erfindung erhaltenen Lacküberzüge können geschliffen und poliert werden, so daß , falls gewünscht, auch hochglänzende,transparente Flächen erhalten werden können. Es wird also zunächst nach dem Lackauftrag ein matter, transparenter Lacküberzug erhalten. Dieser kann aber, gegebenenfalls in Teilbereichen, durch Schleifen und Polieren in einen hochglänzenden, transparenten Lacküberzug übergeführt werden.

Ein wesentlicher Vorteil der Polyesterlacke gemäß der Erfindung besteht darin, daß die damit in Berührung kommenden Anlagen wie Auftragsmaschinen, Rohrleitungen und dergleichen außerordentlich leicht gereinigt werden können, weil bei Anwendung von Lösemitteln zum Reinigen derartiger Vorrichtungen die hochdispersen Harnstoff-Formaldehydkondensate nicht zu Ausfällungen neigen und gemeinsam mit der Verdünnung weggespült werden können.

Die gemäß der Erfindung erhaltenen Lacküberzüge haben eine hohe Kratzfestigkeit .

In der DE-C 29 35 633 ist die Verwendung von hochdispersen Harnstoff-Formaldehydkondensaten als Zusatzstoff für wäßrige Überzugsmassen beschrieben, um Metallmarkierungen zu vermeiden. Daraus kann nicht entnommen werden, daß Polyesterlacke auf Basis ungesättigter Polyesterharze enthaltend hochdisperse Harnstoff-Formaldehydkondensate hochtransparente Überzüge mit den vorzüglichen Eigenschaften ergeben, die oben beschrieben sind. Insbesondere die hohe Transparenz ist überraschend, da die Transparenz eines Lackfilmes u.a. abhängig ist von der Differenz der Brechungsindices des flüssigen Bindemittels zum darin enthaltenen Feststoff. Je größer diese Differenz ist, d.h. , je stärker der Lichtstrahl beim Übergang von einem ins andere Medium gebrochen wird, umso stärker leidet die Durchsichtigkeit des Filmes. Obwohl die Differenz der Brechungsindices vom Polyesterharz einerseits zu Kieselsäuretypen , die nach dem Stand der Technik als Mattierungsmittel eingesetzt sind, und andererseits zu hochdispersen Harnstoff-Formaldehydkondensaten , wie sie gemäß der Erfindung eingesetzt werden, praktisch identisch ist, tritt gemäß der Erfindung überraschenderweise eine Verminderung der Durchsichtigkeit des Filmes nicht oder nur in äußerst geringem Umfang ein. Die gemäß der Erfindung erhaltenen Lackfilme sind also sehr viel transparenter als Lacküberzüge, die mit bekannten handelsüblichen Polyesterlacken erzielt werden, die eine gleiche Gewichtsmenge hochdisperse Kieselsäure als Mattierungsmittel enthalten. Die gilt natürlich besonders für hohe Schichtstärken.

Herstellungsbeispiel A

Ein ungesättigtes Polyesterharz vom Glanztyp wird aus den folgenden Komponenten in der nachfolgend beschriebenen Weise hergestellt:

| Komponente 1 | | 11.9 Gew.% | Ethylenglykol |
|---|---|---|---|
| " | 2 | 6.4 " | Butandiol-1,4 |
| " | 3 | 24.2 " | Trimethylolpropandiallylether |
| " | 4 | 27.3 " | Maleinsäureanhydrid |
| " | 5 | 5.2 " | Xylol |
| " | 6 | 14.3 " | Styrol |
| " | 7 | 3.3 " | Diester aus Maleinsäure und Trimethylolpropandiallylether |
| " | 8 | 7.4 " | Styrol |
| | | 100. 0 Gew.% | |

Die Komponenten 1 bis 5 werden in einem Kessel unter Zugabe von 0.02% Hydrochinon, bezogen auf den Gesamtansatz, in Anwesenheit von Inertgas solange am Rückfluß bei 170°C unter Wasserabscheidung verestert, bis eine Säurezahl (SZ) von 40 bis 45°C erreicht ist. Dann wird bei 160°C weiter kondensiert, bis eine Säurezahl von 25 erhalten wird. Das Xylol wird dann unter Vakuum abdestilliert und das erhaltene Harz solange bei 140°C gehalten, bis eine Viskosität von etwa 1500 cP (75% Harz, gelöst in 25% Styrol, gemessen bei 25°C) erreicht ist. Man kühlt auf 110°C und gibt eine weitere Menge von 0.007% Hydrochinon zu, kühlt weiter auf 80°C und verdünnt mit Styrol (Komponente 6). Nach weiterer Abkühlung auf 40°C werden Komponente 7 und 8 zugegeben.

Herstellungsbeispiel B

Ein Reaktionsgrund wird aus den folgenden Komponenten in der danach beschriebenen Weise hergestellt:

| Komponente | 1 | 7.5 Gew.% | Nitrocellulose |
|---|---|---|---|
| " | 2 | 18.0 " | Toluol |
| " | 3 | 27.5 " | Isobutylacetat |
| " | 4 | 18.0 " | Butylacetat |
| " | 5 | 8.5 " | Methylglykol |
| " | 6 | 9.5 " | Ethylacetat |
| " | 7 | 11.0 " | Cyclohexanonperoxid (90%ig) |
| | | 100.0 Gew.% | |

7.5 Gewichtsteile Nitrocellulose vom Normtyp 9 E mit einem K-Wert von 950 werden in 81.5 Gewichtsteilen des Lösungsmittelgemisches der Komponenten 2 bis 6 unter Rühren gelöst. Hernach wird die Komponente 7 zugegeben und solange gerührt, bis die Lösung völlig klar ist. Mit weiterem Lösungsmittelgemisch der Komponenten 2 bis 6 wird solange verdünnt, bis eine Auslaufzeit mit DIN-Becher, DIN 53 211 von etwa 30 Sek. bei 20° erhalten werden.

Herstellungsbeispiel C
=====================

Ein Polyesterreaktivlack wird aus den nachfolgenden
Komponenten in der danach beschriebenen Weise hergestellt:

           73.5 Gew.-Teile      ungesättigtes Polyesterharz
                                lt. Beispiel A
          7.0 "      "       Pergopak M (eingetragenes
                                Warenzeichen)
          <u>19.5 "      "</u>       Styrol
          100.0 Gew.-Teile

7.0 Gewichtsteile Pergopak M werden in einem Dissolver
20 Min. lang bei einer Drehzahl von 16 m/sek. in 73.5 Gew.-
Teile Polyesterharz eindispergiert und anschließend mit
19.5 Gew.-Teilen Styrol auf etwa 60 DIN-4 Sek. bei
20°C verdünnt.

BEISPIEL 1:
==========

<u>Herstellung eines lackierten Substrates im Polyester-
fertigeffekt.</u>

Auf einer mit einer Dekorfolie versehenen Spanplatte
werden mit einer Gießmaschine (Fabrikat:Bürkle) etwa
70 g/m$^2$ des in Herstellungsbeispiel B beschriebenen
Reaktionsgrundes aufgetragen und innerhalb von 4 Min.
in einem Umlufttrockenkanal bei ansteigender Temperatur
von 25 bis 40°C getrocknet, so daß ein dünner, anquellbarer Lackfilm verbleibt, welcher das für die anschließende Polymerisationsreaktion notwendige organische Peroxid
enthält.

Hiernach wird in einer Naßfilmstärke von 200 µm der in
Herstellungsbeispiel C beschriebene Polyesterlack, versehen mit 1 Gew.% (bezogen auf den Lack)eines Gemisches
aus 60 Gew.-Teilen Toluol und 40 Gew.-Teilen Cobaltoctoat

-13-

(Octa-Soligen-Cobalt 8, eingetragenes Warenzeichen) auf einer weiteren Gießmaschine aufgetragen und wie folgt getrocknet bzw. durch Polymerisation ausgehärtet.

In einer ersten Phase wird der flüssige Lackfilm in einem Umlufttrockenkanal 10 Min. lang einer Temperatur von 50°C ausgesetzt. Nach dieser sogenannten Vorgelierphase erfolgt die Endaushärtung in einem weiteren Trockenkanal 20 Min. lang bei einer Temperatur von 85°C.

Nach Rückkühlung auf Raumtemperatur wird eine völlig klebfreie, kratzfeste, transparente Oberfläche mit einem Glanzgrad von 20% gemessen nach DIN 67 530, mit Multigloss (Typ 406 der Firma Byk-Mallinckrodt) 60° Meßgeometrie erhalten. (Dieses Meßverfahren wird auch in den anderen Beispielen angewandt.)

BEISPIEL 2:
Aushärtung eines UP-Fertigeffektlackes im UV-Licht

7.0 Gewichtsteile Pergopak M werden in 75.0 Gew.-Teilen eines ungesättigten Polyesterharzes im Glanztyp (Aldurol UP 571, eingetragenes Warenzeichen) eingetragen und 10 Min. lang mit einem Dissolver eindispergiert. Danach wird mit 18.0 Gew.Teilen Styrol verdünnt und der so erhaltene Mattlack mit 2.5 Gew.-Teilen eines UV-Sensibilisators (Darocure 1173, eingetragenes Warenzeichen) versetzt.

Auf eine mit einer Dekorfolie versehenen Spanplatte wird mit einem Handrakel eine etwa 50 µm starke Naßfilmschicht des Mattlackes aufgetragen und diese unter einer Hochdruckquecksilberdampflampe mit einer Leistung von 80 Watt/cm (Hanovia-Strahler 6512 A 431, eingetragenes Warenzeichen), welche sich in einem Abstand von 12 cm vom Substrat entfernt befindet, 10 Sek. lang ausgehärtet.

Es wird ein trockener, kratzfester, völlig transparenter
Film mit einem Glanzgrad von 27% erhalten.

BEISPIEL 3:
Aushärtung eines UP-Fertigeffektlackes unter Anwendung
von Elektronenstrahlen

90 g Roskydal 502 (eingetragenes Warenzeichen) wurden mit
10 g Pergopak M (eingetragenes Warenzeichen) unter einem
Dissolver 5 Min. lang bei 8000 U/min dispergiert.

Der so erhaltene Polyesterfertigeffektlack wurde auf eine
mit einer Dekorfolie versehenen Spanplatte mittels eines
Handcoaters (Hand-rakel) in einer Naßfilmschichtstärke
von 25/um aufgetragen und in einer Elektronenstrahlanlage vom Typ ESH 150 (Fa. Dürr) unter Stickstoffatmosphäre mit einer Dosisrate von 80 Mrad ausgehärtet.

Es wird eine klebfreie, kratzfeste Lackoberfläche mit
einem Glanzgrad von 12% erhalten.

BEISPIEL 4:
Aushärtung eines Acrylmonomere enthaltenden Polyesterfertigeffektlackes mittels Elektronenstrahlen

Eine homogene Mischung aus
66 Gewichtsteilen Roskydal KL 5-2459 (eingetr.Warenzeichen)
11 Gewichtsteilen Pergopak M       (eingetr.Warenzeichen)
23 Gewichtsteilen 1,6-Hexandioldiacrylat
wird mit einem Handcoater in einer Naßfilmschichtstärke
von 100/um auf eine mit einer Dekorfolie versehenen Spanplatte aufgetragen und in einer Elektronenstrahlanlage

15

vom Typ ESH 150 (Fa.Dürr) unter Stickstoffatmosphäre
mit einer Dosisrate von 40 Mrad ausgehärtet.

Der erhaltene Lackfilm ist transparent, hart und kratzfest und weist einen Glanzgrad von 60% auf.

Anmelder: HERBERTS Gesellschaft mit beschränkter Haftung, Christbusch 25, D-5600 WUPPERTAL 2

Patentansprüche:

1.) Mattierungsmittel enthaltender Polyesterlack auf Basis ungesättigter Polyesterharze als Bindemittel, zur Herstellung transparenter, matter Lacküber- züge, d a d u r c h   g e k e n n z e i c h n e t , daß das Mattierungsmittel hochdisperse Harnstoff- Formaldehydkondensate sind.

2.) Polyesterlack nach Anspruch 1, dadurch gekennzeichnet, daß die hochdispersen Harnstoff-Formaldehydkondensate eine Teilchengröße von 0.05 bis 1 $\mu$m als Primärkorn aufweisen.

3.) Polyesterlack nach Anspruch 1 oder 2, dadurch gekennzeichnet, daß die hochdispersen Harnstoff-Formaldehydkondensate als Agglomerate mit einem Durchmesser von 1 bis 10 $\mu$m vorliegen.

4.) Polyesterlack nach einem oder mehreren der Ansprüche 1 bis 3, dadurch gekennzeichnet, daß die hochdisperen Harnstoff-Formaldehydkondensate eine spezifische Oberfläche von 4 bis 70 $m^2$/g aufweisen.

5.) Polyesterlack nach einem oder mehreren der Ansprüche 1 bis 4, dadurch gekennzeichnet, daß sie 1 bis 15 Gew.%, bezogen auf den gebrauchsfertigen Lack, an hochdispersen Harnstoff-Formaldehydkondensaten enthalten.

6.) Verwendung des Polyesterlacks nach Ansprüchen 1 bis 5 zur Herstellung transparenter Lacküberzüge in Schichtstärken von 25 bis 500 $\mu$m.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 172 316 (CABOT CORP.) <br> * Ansprüche 1-12,18 * | 1-6 | C 09 D 3/68 <br> C 09 D 7/00 |
| X | FR-A-2 224 503 (P.P.G.) <br> * Ansprüche 1-23 * | 1-6 | |
| X | FR-A-2 083 687 (BALM PAINTS) <br> * Ansprüche 1-6,11-16; Beispiel 1 * | 1-6 | |
| X | GB-A-2 014 159 (FORD MOTOR CO.) <br> * Ansprüche 1-11 * | 1-6 | |
| | | | **RECHERCHIERTE SACHGEBIETE (Int. Cl.4)** <br><br> C 09 D |

Der vorliegende Recherchenbericht wurde für alle Patentansprüche erstellt.

| Recherchenort | Abschlußdatum der Recherche | Prüfer |
|---|---|---|
| DEN HAAG | 04-04-1985 | DECOCKER L. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82